# EUROPEAN PATENT SPECIFICATION

(11) **EP 2 837 741 B1**
(45) Date of publication and mention of the grant of the patent: **03.01.2018**
(21) Application number: 14177640.1
(22) Date of filing: 18.07.2014
(51) Int. Cl.: E02B 17/00, E02D 27/52, B66C 1/42, F16L 55/11

(54) **Assembly of a tube and a plug, and the plug**
Anordnung eines Schlauches und eines Steckers sowie der Stecker
Assemblage tube et bouchon et ledit bouchon

(30) Priority: 19.07.2013 NL 1040305
(43) Date of publication of application: 18.02.2015
(73) Proprietor: Technical & Maritime Supplies B.V., 4251 NL Werkendam (NL); van Driel, Jacobus Albertus, 4251 NL Werkendam (NL); Van Wendel de Joode, Cornelis Frederikus, 4251 NL Werkendam (NL)
(72) Inventor: van Driel, Jacobus Albertus, 4251 NL WERKENDAM (NL); van Wendel de Joode, Cornelis Frederikus, 4251 NL WERKENDAM (NL)
(74) Representative: Grootscholten, Johannes A.M.

(56) References cited:
- Remco Löwenthal ET AL: "IHC Handling Systems", , 16 October 2009 (2009-10-16), XP055142003, Retrieved from the Internet: URL:http://seminarihchydrohammer.com/downl oads/007%20IHC%20Handling%20Systems_Remco% 20Lowenthal.pdf [retrieved on 2014-09-23]

## Description

### Background

The present invention relates to an assembly for sealing a tubular member, like a mono-pile, a tubular member for a wind mill or wind turbine and/or the like, which is provided with a flange at the open end of the pile, and a plug. Where herein below reference is made to a mono-pile, any other similar tubular member is to be understood as comprised within the referenced mono-pile.

In addition to the sealing function of the assembly it is also possible to hoist the flanged pile from one side up, into a standing position (Up-ending) and lift it further up, when required. This may be achieved using hoisting facilities on or of the plug.

Such an assembly is needed when flanged mono-piles or other tubular members are transported in water. By closing the flanged pile at a fluid-tight manner the mono-pile or other similar tubular element will float of the buoyancy thereof.

In the off-shore there is an increasing need of flanged mono-piles and related transportation and handling solutions.

As closest prior art in relation to the present invention, reference is made here to the publication in the name of R. Lowenthal ET AL: "IHC handling systems", October 16, 2009, XP-055142003. This publication discloses an assembly of a mono-pile and a sealing plug.

### Summary of the invention

The present invention relates to an assembly according to claim 1, and a plug according to claim 13. The present invention relates to closing a tubular member, like a mono-pile which is provided with a flange at the open end of the pile, wherein a plug is employed to close the pile or other tubular element in a watertight manner. The pile will be sealed in a fluid-tight manner at the open end of the flanged pile whereby the bolt holes also being sealed by the invention. The pile will float in the water and transportation will be easier.

In addition to the sealing function of the assembly is it also possible to lift the pile from one side up, into a standing position (Up-ending). When the pile is lifted into a standing position then it is possible to lift the pile further upwards without using the friction of the rubber/seal.

The sealing is done by using a rubber or similar profile. By pressing the rubber profile on the flange surface is created a fluid-tight connection between the flanged mono-pile and the assembly. The pressure force on this rubber or similar profile will be generated by an arm system of multiple arms divided over the circumference of the assembly whereby the reaction force will arise when the arm is clamping at the back / inside of the flange. The reaction force in the arms can be provided with hydraulic cylinders or by a lever principle driven by an external force.

The clamping force on the flange creates a clamping device which is strong enough to hoist mono-piles weighing more than 600 tons.

This makes it possible to erect / up-end piles with this invention. If clamps are distributed evenly over the circumference of the flange, hoisting forces, for instance centrally attached to the plug, will be divided equally over the flanged pile which results in lower stresses in the mono-pile during upending and lifting. Alternatively, more clamps or clamping arms could be furnished at a location where a sling or hoist or cable or chain is attached to the plug, to reinforce the connection between the tubular member and the plug at such a location, which may not be central but to a side of the plug. In yet further embodiments the plug may be attached to a cross bar or beam attached to the plug, to facilitate possibilities of more easily engaging the cross bar or beam, for instance using a sling or a hook at sea, where the tubular member may be in motion to sway with the swell of the ocean, and where a relatively small hoisting eye may be difficult to engage with a hook or the like.

To make this invention capable for up-ending and lifting operations is the outside of the assembly provided with hoist facilities.

### Description of drawings

The attached figures, shown various embodiments of the invention and the invention applied on a flanged mono-pile according to the invention:
Fig. 1 exhibits a frontal view of a flange type mono-pile plug with integrated up-end and hoisting facilities;
Fig. 2 exhibits a cross section view of the flange type mono-pile plug with integrated up-end and hoisting facilities and in assembly with the flange type mono-pile tube;
Fig. 3 exhibits a cross section detail, with an open clamping arm of the plug;
Fig. 4 exhibits a cross section detail, with the clamping arm closed;
Fig. 5 exhibits a horizontally oriented transport lay-out;
Fig.'s 6a - 6d exhibit so-called "up-ending" of a pile and hoisting the pile;
Fig. 7 exhibits a perspective view of a flange type mono-pile plug with integrated up-end and hoisting facilities;
Fig. 8 exhibits a perspective side view of a further embodiment of a plug in an assembly according to the present disclosure;
Fig. 9 shows a schematic view of another further embodiment of a plug in an assembly according to the present disclosure;
Fig.'s 10 and 11 respectively show a perspective view of another embodiment of a plug 25 in an assembly with a tubular member and a schematic side view.

**List of reference numerals**

| | | | |
|---|---|---|---|
| 1 | plug | 16 | reinforcing ribs |
| 2 | hoisting facility | 17 | sling drums |
| 3 | mono-pile | 18 | plug |
| 4 | flange | 19 | tabs |
| 5 | clamping arm | 20 | plug |
| 6 | clamping cylinder | 21 | clamping arm |
| 7 | seal, for instance of rubber or similar material | 22 | cilinder |
| | | 23 | extendable part |
| 8 | bolt holes | 24 | clamping head |
| 9 | hoist eye | 25 | plug |
| 10 | reinforcing ribs | 26 | excenter mechanism |
| 11 | disk shaped arcuate plate | 27 | arm |
| 12 | convex side | 28 | cilinder |
| 13 | concave side | 29 | cilinder |
| 14 | hinge | 30 | head |
| 15 | contact | 31 | cilinder |

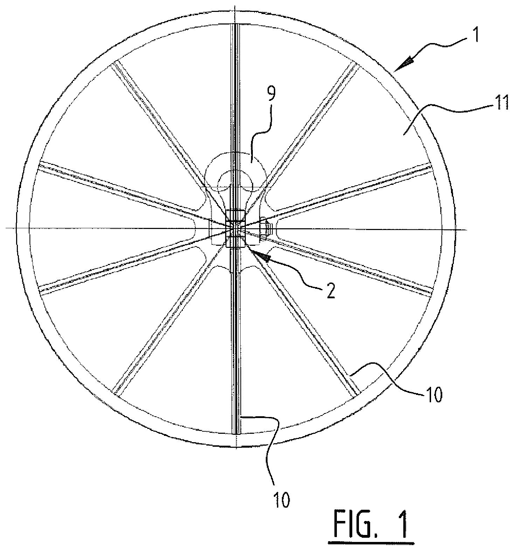

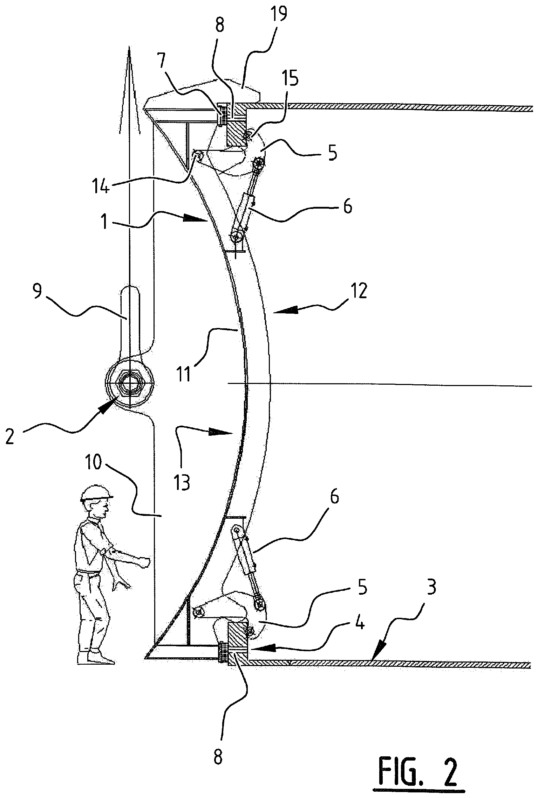

Figure 1 shows a frontal view of a disc shaped plug 1 having towing, pulling or up-ending facility 2, more in particular in the form of towing eye 9. As shown in figure 2, and a plurality of the other figures, the plug 1 comprises an arcuate disc 11 of which a convex side 12 is in an assembled state with a tubular member 3, elsewhere also referred to as a mono-pile, oriented toward an outer end of the tubular member 3. In or against the opposing concave side 13, disk 11 is provided with the reinforcing ribs 10. Alternatively, the disk may be flat or straight, or have any arbitrary shape or form, as long as the diameter of the disk 11 suffices to cover the entire outer end of the tubular member 3, which would otherwise - without the plug - be open to allow water to flow inside the tubular member and cause sinking of the tubular member during transport, in particular through towing, in or over a body of water.

The mono pile or tubular member 3 comprises an inward oriented flange 4, through which bolt holes 8 are provided. The object of the present disclosure is to close off the entire flange in a watertight manner. To achieve this, the flange 4 can be engaged at a circumferential side or edge thereof. Preferably, bolt holes 8 are also closed, since these bolt holes are often arranged at an outer circumference of the flange for an optimal force distribution of a coupling between the pile or other tubular member 3 and a construction element above or below the tubular member in an assembled state, which is usually upright. For the following description, for the most part, it is assumed that the bolt holes 8 need to be covered or closed by the plug 1 or element or component thereof, to achieve the watertight closure of the tubular member 3. However, as indicated above, separate closure of the bolt holes 8 may be omitted, in as far a water tight connection between the outer end of the tubular member 3 having the flange 4 and the plug 1 is achieved, for instance with or by a seal on the flange 4 outside of a diameter defined by the bolt holes 8, which are all embodiments of the central feature of the present disclosure, that the plug is to cover at least one of the bolt holes (8) with the closing element (7) in the watertight manner.

Plug 1 is further provided, on the convex side 12 thereof, with a closing element, for instance a rubber seal 7. The closing element may extend in a shape or diameter, corresponding with positions of bolt holes 8. Alternatively, distinct closing elements may be provided at the location of specific bolt holes 8. An advantage of the ring shaped seal or closing element is that inter-distance between holes 8 is irrelevant for the effective closing thereof by the seal or closing elements. Moreover, with a ring or seal 7 outside a diameter defined by positions of the bolt holes 8, a good watertight closure can already be achieved, without individually closing off the bolt holes 8.

Further, plug 1 is provided, on the convex side 12 thereof, with clamping arms 5. In combination with clamping arms 5, hydraulic cylinders 6 are provided for actuating and driving the clamping arms 5. The clamping arms 5 are hingedly attached to the disc 11 at hinge 14, and exhibit a curvature to allow a contact 15 to press against an inner side of flange 4. Cylinders 6 can be driven to actuate clamping arms 5 into abutment of contact 15 against flange for, or to be retracted from a closing position thereof.

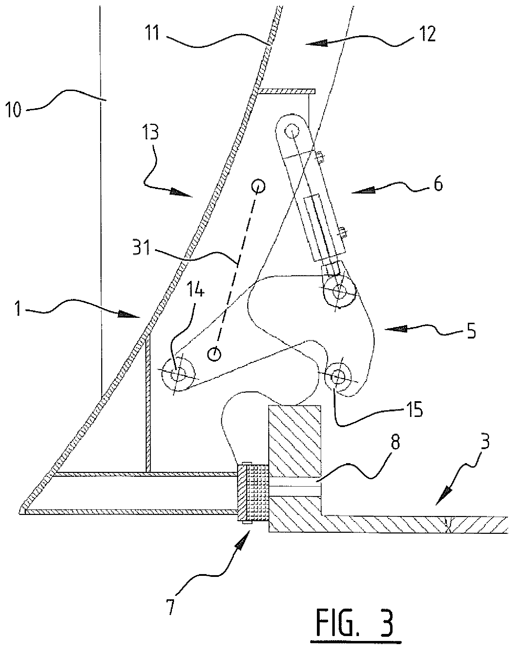

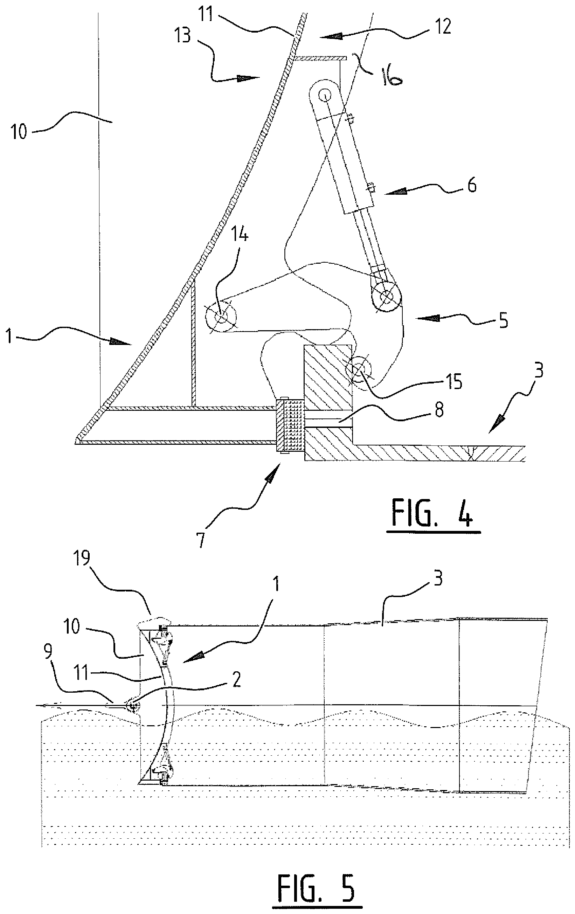

Figure 3 shows this configuration of one of the plurality of clamping arms 5 in a released state, whereas figure 4 shows an enforced position, in which clamping force is exerted by contact 15 of clamping arm 5 to engage flange 4 between seal or closing element 7 and contact 15 on arm 5. Consequently, passages for water through bolt holes 8 can effectively be close in a watertight manner. Therefore, a mono pile or other tubular member 3 can be towed by engaging a table or the like to towing eye 9 and dragging the tubular element in the form of the mono pile 3 through a body of water, as shown in figure 5.

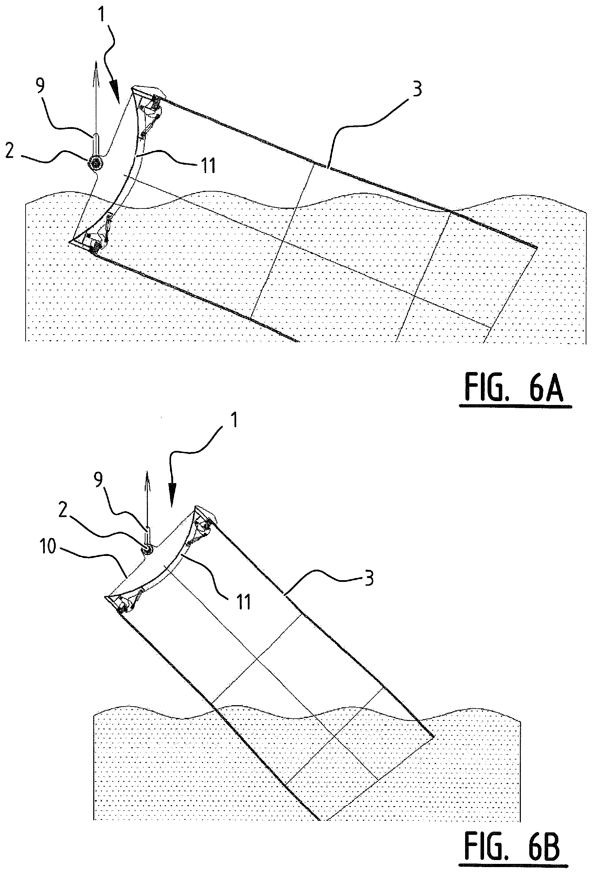

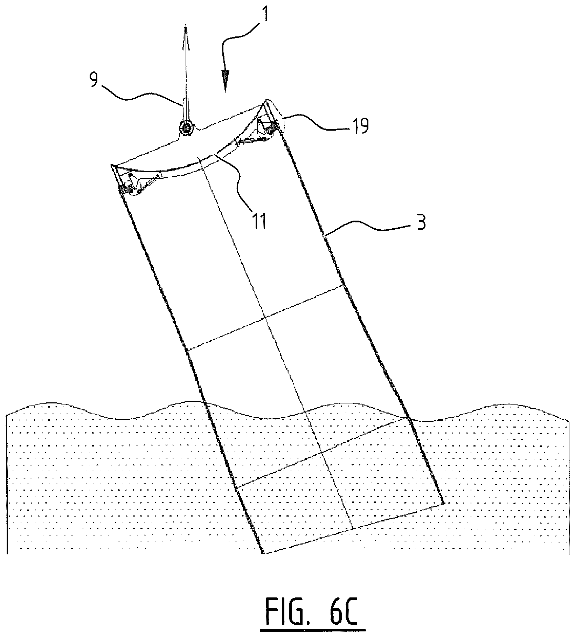

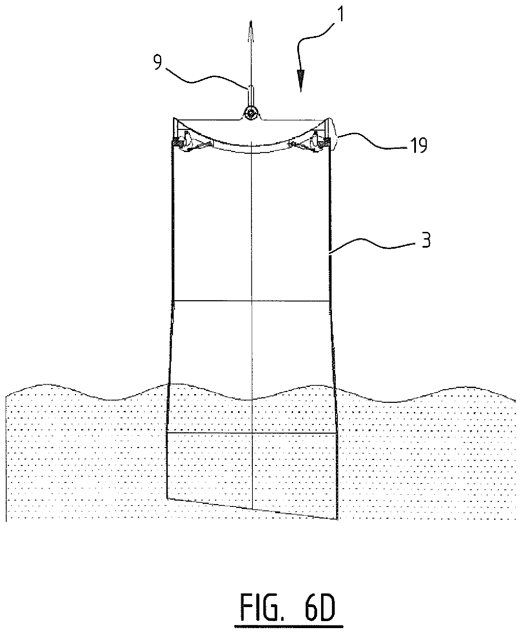

Upon arriving at a destination location, tubular element 3 may need to be upended, which process is depicted in figures 6A, 6B and 6C. With the disc 11 shaped plug 1 firmly held in place, a cable or chain can be arranged to engage towing eye 9 to vertically lift one outer end of tubular member 3 out of the water and thereby upending the tubular member 3. Figure 6D shows the resulting upright position of tubular member 3, in which the tubular member three can be held upright by keeping a cable or chain attached to towing eye 9. The tubular member 3 can, starting from the position and orientation of figure 6D, be hoisted or lifted entirely out of the water, for example to be arranged on top of a basis (not shown) for a sea-based windmill or wind turbine. In such a situation, both outer ends of the tubular member 3 may be provided with an inward oriented flange to allow interconnection of subsequent tubular members 3 on top of each other or on top of a basis, or to allow a generator/rotor combination (not shown) to be attached on top of an upper tubular member 3.

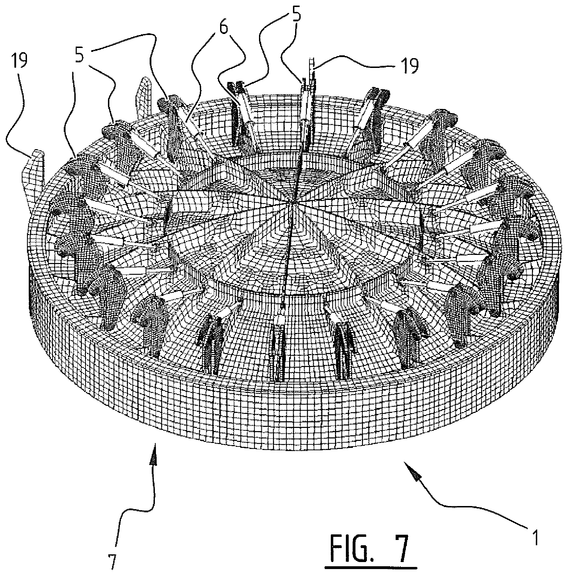

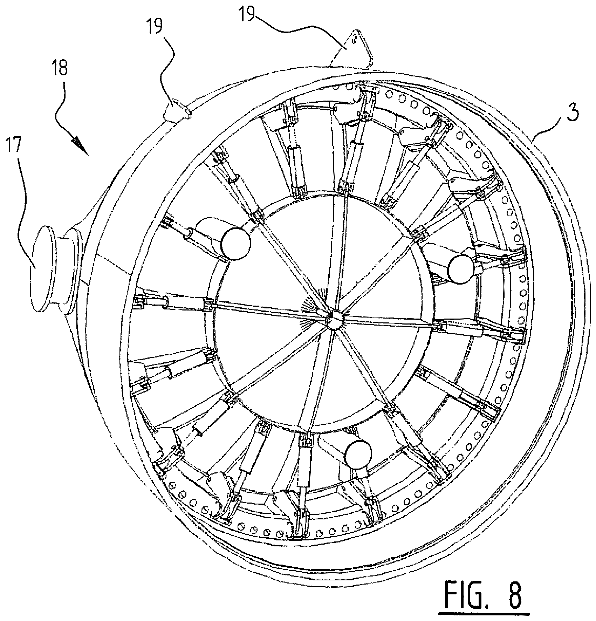

Figures 7 and 8 show schematic perspective representations of plugs 1 according to the present disclosure in isolation and in assembly with the tubular member 3. Also in the representation of figures 3 and 4 it is depicted that the convex side 12 of the arcuate plate 11 can optionally and additionally be provided with reinforcing ribs 16. Further, it is evident from figure 7 that a plurality of clamping arms 5 is provided, where the clamping arms 5 are essentially evenly distributed around the circumference of the plug 1.

Additionally it is noted here that for each clamping arm 5, a corresponding clamping cylinder 6 is provided however, it should be noted here that a plurality of clamping arms 5 can be driven or actuated by combined cylinders (not shown).

The embodiment of figure 8 further comprises sling drums 17 at opposing sides of the plug 18 in the embodiment of figure 8. A sling (not shown in figure 8) can be arranged around sling drums 17 and opposing sling drum 17, which is not visible in figure 8, instead of a cable or chain being arranged to engage hoisting eye 9. Notwithstanding this additional feature of sling drums 17, the plug 18 of figure 8 may also comprise hoisting eye 9.

Further, it is noted here that the embodiments of figure 2, 5, 6, 7 and 8 comprise tabs 19. Plugs 1, 18 can be lifted and arranged against an outer end of tubular member 3 with the inward oriented flange 4 having the bolt holes 8, and may need to be held in place to abut against the outer end of the tubular member 3, until the clamping arms 5 are fully actuated. The tabs 19 extend in an assembled but not yet actuated state of the clamping arms 5 over a top edge of the tubular member 3, as shown in figure 8. Consequently, the plug 18 will be suspended from and then arranged against the outer end of tubular member 3 for a time, during which the clamping arms 5 may be actuated using clamping cylinders 6.

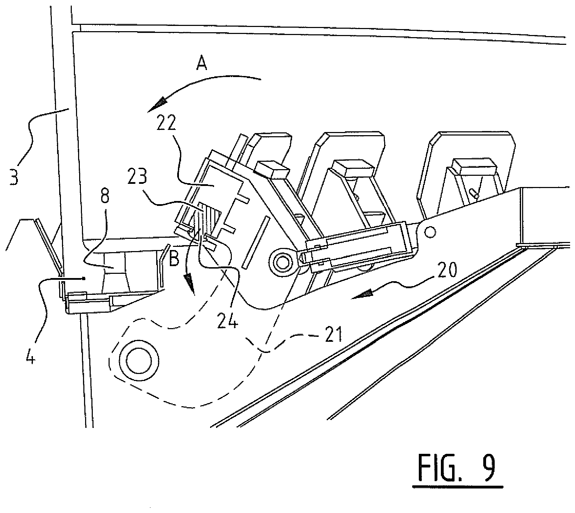

Figure 9 shows an alternative embodiment of plug 20, comprising clamping arms 21 with at the free swivelling end thereof a screw pump, formed by cylinder 22 and extendable part 23. When arm 21 of plug 20 is swivelled in the direction of arrow A, extendable part 23 is extended in the direction of arrow B, to enhance the clamping force and also to cover bolt holes 8, for which the extendable part 23 may be aligned. It is also clearly visible in figure 9, that extendable part 23 has a convex outer side 24, which is pressed onto or into bolt hole 8. Optionally, a closing element can additionally be provided on the convex outer side 24, to further enhance closing of the bolt hole 8.

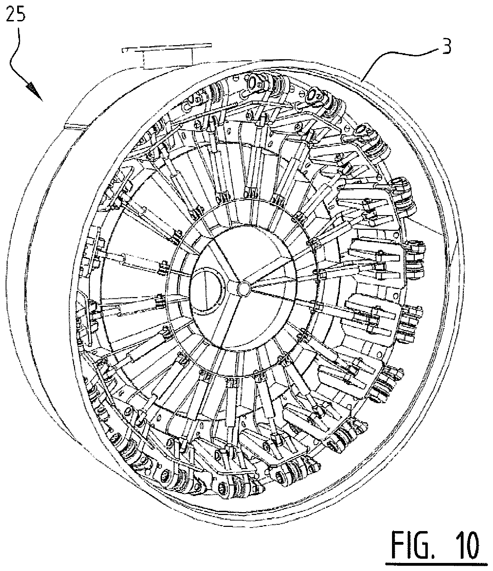

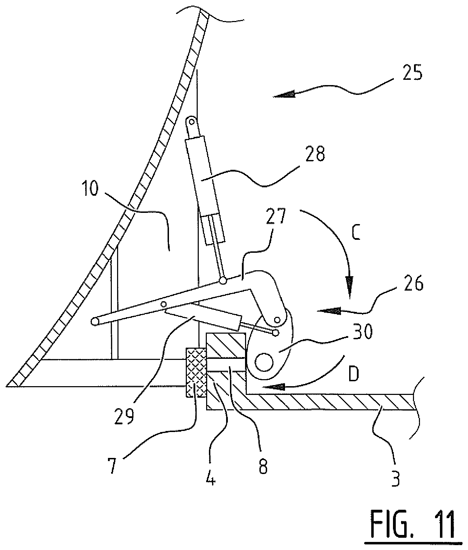

Figures 10 and 11 exhibit a further embodiment of a plug 25, in figure 10 arranged on or against an outer end of a tubular member 3. This embodiment of plug 25 differs from the preceding embodiments in that an centre mechanism 26 is provided at the free end of clamping arms 27. Clamping arms 27 are in themselves moved or swivelled under influence of the cylinders 28, which are quite comparable with the clamping cylinder 6 in the preceding embodiments. Once the clamping arm 27 has reached a position in the direction of arrow C for engaging or clamping a flange 4 of a tubular member 3, a further cylinder 29 may be actuated to drive a head 30 in the direction of arrow D to engage flange 4 between head 30 and for instance the closing element 7. When cylinders 28 are retracted and cylinders 29 are extended, head 30 will be able to pass along an inner edge of flange 4. Thus, plug 25 can be attached to and/or released from the tubular member 3 in a relatively simple manner.

Based on the foregoing description, any skilled reader will appreciate that the present disclosure encompasses in the scope of protection therefore, according to the appended claims and in particular the appended independent claims, many alternative and/or additional embodiments compared with those explicitly described above and shown in the appended drawing. For example, a wedge in combination with a drive, such as a cylinder, may form a clamping arm to be used to engage the back of flange 4 and thus exert the desired and/or necessary clamping force, which may result in a very simple and elegant embodiment.

Additionally or alternatively, the arm 5 in figures 2, 3 and 4 may be equipped with a further drive 31, indicated only in figure 3, to be pushed against a pivot axis associated with the hinge 14, to thereafter be rotated to the position of figure 4. Such an embodiment allows for the arm to be even better kept out of the way of the inner edge of flange 4, when assembling plug 4 and tubular element 3. The arms may be made to extend from the flange or from the outside of the tubular member, instead of from the plug, and releasably engage the plug, which is merely a kinematic reversal of the above described configurations in which the arms extend from the plug to releasably engage the flange at, on or in an interior side thereof relative to the interior of the tubular member.

These examples illustrate that the present disclosure can relate to many alternative and/or additional embodiments relative to the explicitly exhibit examples, which are all to be considered to be lying within the aforementioned scope of protection, unless such alternative and/or additional embodiments substantially diverge from the terms and definitions of the appended claims, and in particular of the appended independent claim. The clamping arms do not necessarily have to be distributed uniformly or essentially evenly around the circumference of the flange, but may be grouped or distributed in any arbitrary manner, with the objective of watertight closing of the tubular member.

## Claims

1. Assembly of a tubular member with a flange and a plug for the tubular member, like a mono-pile, a tubular member for a wind mill or wind turbine or the like, with the flange, said plug being configured to be attached at an outer end of the tubular member with the flange, in which the plug (1) for the tubular member with the flange closes the outer end of the tubular member (3) with the flange (4) in a fluid tight manner, wherein
- the flange (4) is oriented inward relative to the tubular member (3) and comprises bolt holes (8);
- the plug comprises at least one closing element (7) configured to cover the bolt holes (8) in an assembled state of the assembly; and
- the assembly comprises clamping arms (5) configured to provide a sufficient clamping force on both the plug and the outer end of the tubular member (3) with the flange (4) to cover at least one of the bolt holes (8) with the closing element (7) in the watertight manner.

2. Assembly according to claim 1, wherein the closing element comprises a rubber seal (7).

3. Assembly according to claim 1 or 2, wherein the closing element comprises a ring, the shape of which corresponds with a form in which the diameter bolt holes (8) are arranged in the flange (4).

4. Assembly according to claim 1, 2 or 3, wherein a plurality of the clamping arms (5) is essentially practically distributed relative to a circumference of the flange (4).

5. Assembly according to claim any one or more than one of the preceding claims, wherein the clamping arms engage on an inward oriented surface of the flange relative to the tubular member (3).

6. Assembly according to claim any one or more than one of the preceding claims, wherein at least one hydraulic cylinders (6) is provided in combination the clamping arms (5) to generate the required clamping force and actuation of the clamping arms (5).

7. Assembly according to claim any one or more than one of the preceding claims, wherein the plug comprises integrated hoisting and or pulling or towing capabilities, and the clamping force exerted by the clamping arms is sufficient to allow at least one of horizontal, diagonal and vertical pulling/towing and/or hoisting of the assembly for transport in or over water and/or hoisting and/or up-ending to a vertical position.

8. Assembly according to claim any one or more than one of the preceding claims, wherein the plug (1) comprises an arcuate disk (11).

9. Assembly according to claim 8, wherein a convex side of the arcuate disk (11) is configured to be oriented against the outer end of the tubular member (3).

10. Assembly according to claim 8 or 9, wherein on the convex side of the arcuate disk is arranged at least one of the elements or components from the group, comprising: the clamping arms (5); the closing element (7); the clamping cylinders (6).

11. Assembly according to any one or more than one of the preceding claims, wherein the plug (1) comprises a straight or flat disk (11).

12. Assembly according any one or more than one of the preceding claims, wherein the plug (1) comprises the clamping arms, which in an activated state extend around the flange (4).

13. Plug (1) for sealing a tubular member, like a mono-pile, a tubular member for a wind mill or wind turbine, or the like, to be assembled in use with a tubular member (3) in an assembly as defined in any one or more than one of the preceding claims, the plug comprising at least one closing element (7) configured to cover at least some of the bolt holes (8) in an assembled state of the assembly; and clamping arms (5) configured to provide a sufficient clamping force on both the plug and the outer end of the tubular member (3) with the flange (4) to cover at least one of the bolt holes (8) with the closing element (7) in the watertight manner.

## Patentansprüche

1. Einrichtung aus einem rohrförmigen Element mit einem Flansch und einem Verschluss für das rohrförmige Element, wie ein Monopile, ein rohrförmiges Element für ein Windrad oder eine Windturbine oder dergleichen, mit dem Flansch, wobei der Verschluss konfiguriert ist, um an einem äußeren Ende des rohrförmigen Elements mit dem Flansch angebracht zu sein, wobei der Verschluss (1) für das rohrförmige Element mit dem Flansch das äußere Ende des rohrförmigen Elements (3) mit dem Flansch (4) auf eine fluiddichte Weise verschließt,
wobei
- der Flansch (4) relativ zu dem rohrförmigen Element (3) nach innen ausgerichtet ist und Bolzenlöcher (8) aufweist,
- der Verschluss mindestens ein Verschließelement (7) aufweist, das konfiguriert ist, um die Bolzenlöcher (8) in einem Zusammenbauzustand der Einrichtung zu bedecken, und
- die Einrichtung Klemmarme (5) aufweist, die konfiguriert sind, um eine ausreichende Klemmkraft sowohl an dem Verschluss als auch an dem äußeren Ende des rohrförmigen Elements (3) mit dem Flansch (4) bereitzustellen, um mindestens eines der Bolzenlöcher (8) mit dem Verschließelement (7) auf die wasserdichte Weise zu bedecken.

2. Einrichtung gemäß Anspruch 1, wobei das Verschließelement eine Gummidichtung (7) aufweist.

3. Einrichtung gemäß Anspruch 1 oder 2, wobei das Verschließelement einen Ring aufweist, dessen Form mit einer Form korrespondiert, in der die Durchmesser-Bolzenlöcher (8) in dem Flansch (4) angeordnet sind.

4. Einrichtung gemäß Anspruch 1, 2 oder 3, wobei eine Mehrzahl der Klemmarme (5) im Wesentlichen praktisch relativ zu einem Umfang des Flansches (4) verteilt ist.

5. Einrichtung gemäß irgendeinem Anspruch oder mehr als einem der vorhergehenden Ansprüche, wobei die Klemmarme an einer nach innen ausgerichteten Fläche des Flansches relativ zu dem rohrförmigen Element (3) in Eingriff sind.

6. Einrichtung gemäß irgendeinem Anspruch oder mehr als einem der vorhergehenden Ansprüche, wobei mindestens ein Hydraulikzylinder (6) in Kombination mit den Klemmarmen (5) vorgesehen ist, um die erforderliche Klemmkraft und Betätigung der Klemmarme (5) zu erzeugen.

7. Einrichtung gemäß irgendeinem Anspruch oder mehr als einem der vorhergehenden Ansprüche, wobei der Verschluss integrierte Hebe- oder Zieh- oder Schlepp-Fähigkeiten aufweist und die Klemmkraft, die von den Klemmarmen ausgeübt wird, ausreichend ist, um mindestens eines von einem horizontalen, diagonalen und vertikalen Ziehen/Schleppen und/oder Heben der Einrichtung zum Transportieren in oder über Wasser und/oder Heben und/oder Aufrichten in eine vertikale Position zu ermöglichen.

8. Einrichtung gemäß irgendeinem Anspruch oder mehr als einem der vorhergehenden Ansprüche, wobei der Verschluss (1) eine bogenförmige Scheibe (11) aufweist.

9. Einrichtung gemäß Anspruch 8, wobei eine konvexe Seite der bogenförmigen Scheibe (11) konfiguriert ist, um gegen das äußere Ende des rohrförmigen Elements (3) ausgerichtet zu sein.

10. Einrichtung gemäß Anspruch 8 oder 9, wobei an der konvexen Seite der bogenförmigen Scheibe mindestens eines der Elemente oder Komponenten aus der Gruppe angeordnet ist, die aufweist: die Klemmarme (5), das Verschließelement (7), die Klemmzylinder (6).

11. Einrichtung gemäß irgendeinem oder mehr als einem der vorhergehenden Ansprüche, wobei der Verschluss (1) eine gerade oder flache Scheibe (11) aufweist.

12. Einrichtung gemäß irgendeinem oder mehr als einem der vorhergehenden Ansprüche, wobei der Verschluss (1) die Klemmarme aufweist, die sich in einem aktivierten Zustand um den Flansch (4) herum erstrecken.

13. Verschluss (1) zum Abdichten eines rohrförmigen Elements, zum Beispiel eines Monopiles, eines rohrförmigen Elements für ein Windrad oder eine Windturbine oder dergleichen,
der im Gebrauch mit einem rohrförmigen Element (3) in einer wie in irgendeinem oder mehr als einem der vorhergehenden Ansprüche definierten Einrichtung zu montieren ist, wobei der Verschluss aufweist: mindestens ein Verschließelement (7), das konfiguriert ist, um mindestens einige der Bolzenlöcher (8) in einem Zusammenbauzustand der Einrichtung zu bedecken, und Klemmarme (5), die konfiguriert sind, um eine ausreichende Klemmkraft sowohl an dem Verschluss als auch an dem äußeren Ende des rohrförmigen Elements (3) mit dem Flansch (4) bereitzustellen, um mindestens eines der Bolzenlöcher (8) mit dem Verschließelement (7) auf die wasserdichte Weise zu bedecken.

## Revendications

1. Assemblage d'un élément tubulaire avec une bride et d'un bouchon pour l'élément tubulaire, comme une monopile, un élément tubulaire pour un moulin à vent ou une éolienne ou similaire, avec la bride, ledit bouchon étant configuré pour être fixé au niveau d'une extrémité externe de l'élément tubulaire avec la bride, dans lequel le bouchon (1) pour l'élément tubulaire avec la bride ferme l'extrémité externe de l'élément tubulaire (3) avec la bride (4) d'une manière étanche au fluide, dans lequel :
la bride (4) est orientée vers l'intérieur par rapport à l'élément tubulaire (3) et comprend des trous de boulon (8) ;
le bouchon comprend au moins un élément de fermeture (7) configuré pour recouvrir les trous de boulon (8) dans un état assemblé de l'assemblage ; et
l'assemblage comprend des bras de serrage (5) configurés pour fournir une force de serrage suffisante à la fois sur le bouchon et l'extrémité externe de l'élément tubulaire (3) avec la bride (4) pour recouvrir au moins l'un des trous de boulon (8) avec l'élément de fermeture (7) d'une manière étanche à l'eau.

2. Assemblage selon la revendication 1, dans lequel l'élément de fermeture comprend un joint d'étanchéité en caoutchouc (7).

3. Assemblage selon la revendication 1 ou 2, dans lequel l'élément de fermeture comprend une bague, dont la forme correspond à une forme dans laquelle les trous de boulon diamétraux (8) sont agencés dans la bride (4).

4. Assemblage selon la revendication 1, 2 ou 3, dans lequel une pluralité de bras de serrage (5) est essentiellement pratiquement répartie par rapport à une circonférence de la bride (4).

5. Assemblage selon l'une quelconque ou plus d'une des revendications précédentes, dans lequel les bras de serrage se mettent en prise sur une surface orientée vers l'intérieur de la bride par rapport à l'élément tubulaire (3).

6. Assemblage selon l'une quelconque ou plus d'une des revendications précédentes, dans lequel au moins un vérin hydraulique (6) est prévu en combinaison avec les bras de serrage (5) afin de générer la force de serrage requise et l'actionnement des bras de serrage (5).

7. Assemblage selon l'une quelconque ou plus d'une des revendications précédentes, dans lequel le bouchon comprend des capacités de levage ou de traction ou de remorquage intégrées, la force de serrage exercée par les bras de serrage est suffisante pour permettre au moins l'un parmi une traction / un remorquage et/ou un levage horizontal, diagonal et vertical de l'assemblage pour le transport dans ou sur l'eau et/ou le levage et/ou le redressement dans une position verticale.

8. Assemblage selon l'une quelconque ou plus d'une des revendications précédentes, dans lequel le bouchon (1) comprend un disque arqué (11).

9. Assemblage selon la revendication 8, dans lequel un côté convexe du disque arqué (11) est configuré pour être orienté contre l'extrémité externe de l'élément tubulaire (3).

10. Assemblage selon la revendication 8 ou 9, dans lequel, du côté convexe du disque arqué, on agence au moins l'un parmi les éléments ou les composants du groupe comprenant : les bras de serrage (5) ; l'élément de fermeture (7) ; les cylindres de serrage (6).

11. Assemblage selon l'une quelconque ou plus d'une des revendications précédentes, dans lequel le bouchon (1) comprend un disque droit ou plat (11).

12. Assemblage selon l'une quelconque ou plus d'une des revendications précédentes, dans lequel le bouchon (1) comprend les bras de serrage qui, dans un état activé, s'étendent autour de la bride (4).

13. Bouchon (1) pour sceller un élément tubulaire, comme un monopile, un élément tubulaire pour un moulin à vent ou une éolienne ou similaire, à assembler, à l'usage, avec un élément tubulaire (3) dans un assemblage selon l'une quelconque ou plus d'une des revendications précédentes, le bouchon comprenant au moins un élément de fermeture (7) configuré pour recouvrir au moins certains des trous de boulon (8) dans un état assemblé de l'assemblage ;
et des bras de serrage (5) configurés pour fournir une force de serrage suffisante à la fois sur le bouchon et l'extrémité externe de l'élément tubulaire (3) avec la bride (4) afin de recouvrir au moins l'un des trous de boulon (8) avec l'élément de serrage (7) d'une manière étanche à l'eau.
